**Europäisches Patentamt**

**European Patent Office**

**Office européen des brevets**

(19)

(11) Veröffentlichungsnummer: **0 102 113**
**B1**

(12) # EUROPÄISCHE PATENTSCHRIFT

(45) Veröffentlichungstag der Patentschrift:
**04.11.87**

(51) Int. Cl.⁴: **G 02 B 6/26**

(21) Anmeldenummer: **83201142.3**

(22) Anmeldetag: **02.08.83**

(54) **Optischer Sternkoppler.**

(30) Priorität: **07.08.82 DE 3229571**

(43) Veröffentlichungstag der Anmeldung:
**07.03.84 Patentblatt 84/10**

(45) Bekanntmachung des Hinweises auf die Patenterteilung:
**04.11.87 Patentblatt 87/45**

(84) Benannte Vertragsstaaten:
**DE FR GB SE**

(56) Entgegenhaltungen:
**DE-A-2 837 682**
**DE-A-3 035 858**
**DE-B-2 745 940**
**US-A-3 937 557**

(73) Patentinhaber: **Philips Kommunikations Industrie AG, Thurn- und- Taxis- Strasse 10, D-8500 Nürnberg 10 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **FR GB SE**

(72) Erfinder: **Mannschke, Lothar, Dipl.- Ing., Haidbuckel 23, D-8501 Eckental (DE)**

(74) Vertreter: **Peuckert, Hermann, Dipl.- Ing., Philips Patentverwaltung GmbH Wendenstrasse 35 Postfach 10 51 49, D-2000 Hamburg 1 (DE)**

**Beschreibung**

Die Erfindung betrifft einen optischen Sternkoppler mit getaperten, jeweils Kern und Mantel aufweisenden Lichtwellenleitern für die Verzweigung in optischen Übertragungssystemen. In der optischen Nachrichtenübertragungstechnik werden Sternkoppler insbesondere für Bussysteme verwendet.

Aus der DE-A-30 35 858 ist bereits ein Sternkoppler mit getaperten Lichtwellenleitern bekannt. Dabei wird der Übergang von Moden, die im Faserkern nicht mehr ausbreitungsfähig sind, in den Fasermantel berücksichtigt. Jedoch bleibt der Nachteil bestehen, daß an stumpf aufeinander gesetzten Enden der Taper von Lichtwellenleitern unerwünschte Einfügverluste entstehen, insbesondere dann, wenn die Durchmesser zu verbindender Enden ungleich sind. Das gilt insbesondere für asymmetrisch ausgebildete Sternkoppler. Solche Einfügverluste lassen sich auch mit Präzisionsverbindungselementen nur geringfügig mindern.

In der US-A-3 937 557 ist ein Sternkoppler beschrieben, welcher aus GRIN-Linsen (Gradientenstablinsen) aufgebaut ist, die alle ein Viertel Pitch lang sind. Der Lichtaustrittsfläche einer ersten GRIN-Linse stehen die Lichtaustrittsflächen mehrerer GRIN-Linsen gegenüber, welche entsprechend kleinere Durchmesser haben. An der ersten GRIN-Linse sind mehrere Lichtwellenleiter angekoppelt, während an jede der einzelnen GRIN-Linsen nur je ein einzelner Lichtwellenleiter angekoppelt ist. Die an einer Fläche einer GRIN-Linse eintretende parallele Strahlung wird auf die an der gegenüberliegenden Fläche angekoppelten Lichtwellenleiter fokussiert. Die Lichtwellenleiter sind jeweils stumpf auf der Oberfläche der GRIN-Linsen angekoppelt und zwar so, daß die Lichtwellenleiterachsen parallel zu den Achsen der GRIN-Linsen verlaufen.

Der Erfindung liegt die Aufgabe zugrunde, einen mit möglichst wenig Einfügverlusten arbeitenden Sternkoppler zu schaffen, der ohne besonderen Aufwand an Verbindungsmitteln herstellbar ist.

Die Aufgabe wird bei einem Sternkoppler der eingangs genannten Art dadurch gelöst, daß die Taper auf gegenüberliegenden Sternflächen einer Gradientenstablinse befestigt sind, deren Länge im Bereich zwischen einem Viertel und der Hälfte der Periode zu übertragender Strahlung liegt und so bemessen ist, daß auch aus dem Mantel nach außen austretende Strahlung auf die Lichtwellenleiter der jeweils anderen Seite abgebildet wird. Anstelle der Übergabestelle stumpf aufeinanderstoßender Taperenden tritt ein optisches Abbildungssystem, das eine bei dem bekannten nichterzielbare weitere Verminderung der Einfügverluste zuläßt.

Der Erfindung liegt die Erkenntnis zugrunde, daß sich mit Gradientenstablinsen eine, beispielsweise durch Taperung verursachte Veränderung der Strahlungskeulen oder Strahlungskegel ausgleichen läßt.

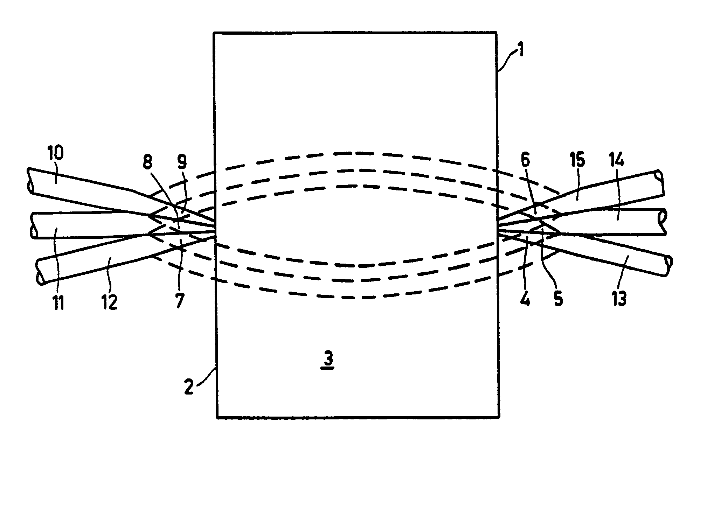

Die Erfindung wird mit weiteren in den Unteransprüchen angegebenen vorteilhaften Ausgestaltungen anhand des in der Zeichnung schematisch dargestellten Ausführungsbeispiels näher erläutert und beschrieben.

Auf den Stirnflächen 7 und 2 der Gradientenindex-Stablinse (GRIN-Linse) 3 sind zentral jeweils die Spitzen der Taper 4 bis 9 von Lichtwellenleitern 10 bis 15 befestigt. Die Befestigung kann mit Hilfe einer Steckverbindung erfolgen, durch die entweder zwei GRIN-Linsenhälften zusammengesetzt werden, oder jeweils die Taper einer Seite auf der Stirnfläche einer GRIN-Linse angeordnet werden. Eine besonders einfache Herstellungsweise ergibt sich für unlösbar zu befestigende Taper durch Verkleben auf den jeweiligen Stirnflächen der GRIN-Linse.

Die Verringerung von Ausbreitungsfähigkeit von Moden durch Taperung eines Lichtwellenleiters hat zur Folge, daß zu übertragende Strahlung aus dem Kern in den Mantel gelangt und anschließend aus dem Mantel austritt und einen Strahlenkegel bildet. Der Raumwinkel dieser Strahlung ist nicht mehr vergleichbar mit der normalerweise aus einem Lichtwellenleiter austretenden Strahlung. Durch die GRIN-Linse 3 ist es möglich, auch die aus dem Mantel mit großem Raumwinkel austretende Strahlung zu erfassen und wieder in den Akzeptanzbereich der auf der gegenüberliegenden Austrittsfläche der GRIN-Linse 3 angekoppelten wegführenden Lichtwellenleiter zu bringen. Diese Übertragung erfolgt in den in der Fig. gepunktet dargestellten Strahlungsräumen. Die GRIN-Linse 3 ist daher nach der Länge ihrer Strahlperiode (pitch) im Bereich zwischen 1/4 und 1/2 pitch bemessen. Dadurch sind die Bereiche, in denen sich zu übertragende Kernmoden gegenseitig durchdringen in die GRIN-Linse 3 verlegt. Auch werden alle angekoppelten Lichtwellenleiter gleichmäßig ausgeleuchtet. Das Besondere ist die Vermischung der im Taperbereich aus dem Mantel austretenden Strahlung mit der im Bereich des Zentrums aus den Taperendflächen in die GRIN-Linse 3 eintretenden Strahlung und das anschließend im weiteren Durchgang durch die GRIN-Linse erfolgende Konvergieren der gesamten Strahlung auf die gegenüberliegende Koppelstelle.

Nach vorgegebenem Muster könnten weitere Versionen von Sternkopplern gemäß der Erfindung hergestellt werden, bei denen die GRIN-Linse sich nach den jeweiligen Abbildungsverhältnissen zu richten hat. Diese Versionen haben gemeinsam, daß die Abbildung der GRIN-Linse außer der Kernstrahlung ferner Strahlungen der Mantelmoden und ausgetretener Strahlung im Bereich des Fasermantels berücksichtigt, die eine besonders gute Durchmischung der gleichmäßig zu verteilenden Strahlung ergibt.

## Patentansprüche

1. Sternkoppler mit getaperten, jeweils Kern und Mantel aufweisenden Lichtwellenleitern für die Verzweigung in optischen Übertragungssystemen, dadurch gekennzeichnet, daß die Taper auf gegenüberliegenden Stirnflächen einer Gradientenstablinse befestigt sind, deren Länge im Bereich zwischen einem Viertel und der Hälfte der Periode zu übertragender Strahlung liegt und so bemessen ist, daß auch aus dem Mantel nach außen austretende Strahlung auf die Lichtwellenleiter der jeweils anderen Seite abgebildet wird.

2. Sternkoppler nach Anspruch 1, dadurch gekennzeichnet, daß die Taper zentral auf beiden Stirnflächen verklebt und/oder vergossen sind.

3. Sternkoppler nach Anspruch 1 oder 2, dadurch gekennzeichnet, daß die Gradientenstablinse aus zwei voneinander lösbaren Teilen besteht.

## Claims

1. A star coupler comprising tapered optical fibres, having a respective core and cladding, for branching in optical transmission systems, characterized in that the tapered portions are connected to oppositely situated end faces of a graded index rod lens, their length being in the range of from one quarter to one half of the period of the radiation to be transmitted and being proportioned so that radiation emerging from the cladding to the environment is also directed onto the optical fibre at the other side.

2. A star coupler as claimed in Claim 1, characterized in that the tapered portions are centrally bonded and/or moulded to both end faces.

3. A star coupler as claimed in Claim 1 or 2, characterized in that the graded index rod lens consists of two detachable parts.

## Revendications

1. Connecteur en étoile muni de fibres optiques se terminant en cône et comportant chacune un coeur et une gaine, connecteur qui est conçu pour le branchement dans des systèmes de transmission optiques, caractérisé en ce que les parties terminales coniques sont fixées sur des surfaces terminales opposées d'une lentille en forme de barre à gradient d'indice dont la longueur est comprise entre un quart et la moitié de la période du rayonnement à transmettre et est déterminée de façon que du rayonnement sortant de la gaine soit également reproduite sur la fibre optique fixée sur l'autre surface.

2. Connecteur en étoile selon la revendication 1, caractérisé en ce que les parties terminales sont fixées en position centrale sur les deux surfaces terminales par collage et/ou par scellement.

3. Connecteur en étoile selon la revendication 1 ou 2, caractérisé en ce que la lentille en forme de barre à gradient d'indice est constituée par deux parties détachables.